# EUROPÄISCHE PATENTSCHRIFT

(11) **EP 1 365 540 B1**
(45) Veröffentlichungstag und Bekanntmachung des Hinweises auf die Patenterteilung: **12.07.2006**
(21) Anmeldenummer: 03101229.7
(22) Anmeldetag: 02.05.2003
(51) Int. Cl.: H04L 12/28, H04L 12/44, H04L 12/10

(54) **Datennetzschnittstelle und Kommunikationseinrichtungen mit Datennetzschnittstelle**
Data network interface and communication terminals with a data network interface
Interface de réseau de données et terminaux de communication avec interface de réseau de données

(30) Priorität: 14.05.2002 DE 10221425
(43) Veröffentlichungstag der Anmeldung: 26.11.2003
(73) Patentinhaber: SIEMENS AKTIENGESELLSCHAFT, 80333 München (DE)
(72) Erfinder: Krug, Wilfried, 58452, Witten (DE); Lucioni, Gonzalo, 58454, Witten (DE)

(56) Entgegenhaltungen:
- EP-A- 0 981 227
- EP-A- 1 100 226
- GB-A- 2 276 048

## Beschreibung

Gegenwärtige Kommunikationssysteme basieren meist auf einer leitungsorientierten Infrastruktur zur Sprachkommunikation und einer zusätzlichen datenpaketorientierten Infrastruktur zur Datenkommunikation. Die leitungsorientierte Kommunikation betrifft insbesondere die herkömmliche analoge oder digitale Sprachtelephonie. Im Rahmen einer gegenwärtig stattfindenden Entwicklung wird angestrebt, leitungsorientierte Kommunikationskomponenten schrittweise in eine paketorientierte Kommunikationsumgebung, z.B. in bestehende lokale Netze, sog. LANs (Local Area Network), zu migrieren.

Aus GB-A-2276048 ist eine Vorrichtung zu entnehmen zum gemeimsamen Verwenden eines Datenkabels für mehrere Verbindungen durch Verwenden von üblicherweise bisher nicht verwendeten Adern eines Datenkabels.

Bei einer Migration auf ein reines paketorientiertes Datennetz sind gemäß dem bisherigen Stand der Technik vorhandene leitungsorientierte Endgeräte entweder durch paketorientierte Endgeräte zu ersetzen oder mit einem Umsetzer, z.B. einem sog. Internetprotokolladapter, zum Umsetzen zwischen leitungsorientierter und paketorientierter Kommunikation nachzurüsten. Entsprechende paketorientierte Endgeräte zur Sprachkommunikation oder entsprechende Umsetzer sind jedoch technisch sehr aufwendig. Zudem stellen derartige Endgeräte bzw. Umsetzer aufgrund der erforderlichen Qualität einer Echtzeit-Sprachübertragung erhebliche Bandbreiten- und Laufzeitanforderungen an das dem Datentransport zugrunde liegende paketorientierte Datennetz.

Demgegenüber erfordert ein Weiterverwenden unveränderter leitungsorientierter Endgeräte gemäß dem bisherigen Stand der Technik ein separates Kabelnetz zum Anschluss dieser Endgeräte zusätzlich zum Kabelnetz des Datenpaketnetzes. Eine solche Verwendung zweier getrennter Kabelnetze zur Sprach- und Datenkommunikation ist ebenfalls sehr aufwendig.

Es ist Aufgabe der vorliegenden Erfindung, weniger aufwändige Anordnungen anzugeben, mittels derer leitungsorientierte Kommunikationseinrichtungen in eine paketorientierte Datennetz-Infrastruktur integrierbar sind.

Gelöst wird diese Aufgabe durch eine Datennetzschnittstelle mit den Merkmalen des Patentanspruchs 1, eine Datenpaketvermittlungseinrichtung mit den Merkmalen des Patentanspruchs 6 bzw. 7, eine Kommunikationseinrichtung mit den Merkmalen des Patentanspruchs 8 sowie durch ein Kommunikationssystem mit den Merkmalen des Patentanspruchs 9.

Vorteilhafte Ausführungsformen und Weiterbildungen der Erfindung sind in den abhängigen Ansprüchen angegeben.

Durch eine erfindungsgemäße Datennetzschnittstelle können leitungsorientierte Kommunikationseinrichtungen, wie z.B. digitale oder analoge End- oder Vermittlungseinrichtungen zur Sprach-, Video- und/oder Fax-Echtzeitkommunikation, mit geringem Aufwand über ein paketorientiertes Datennetz, wie z.B. ein LAN (Local Area Network), ein WAN (Wide Area Network) und/oder ein SAN (System Area Network), gekoppelt werden.

Die Datennetzschnittstelle weist einen Datennetzanschluss zum Ankoppeln eines Datennetzkabels des Datennetzes sowie einen Kommunikationsnetzanschluss zum Ankoppeln einer Kommunikationseinrichtung zum Aufbau von leitungsorientierten Kommunikationsverbindungen auf.

Erfindungsgemäß verfügt die Datennetzschnittstelle ferner über zwischen dem Kommunikationsnetzanschluss und dem Datennetzanschluss angeordnete Koppelmittel zum Übertragen von Kommunikationssignalen, z.B. analogen Telephoniesignalen oder digitalen TDM-Signalen (TDM: Time Division Multiplex) der Kommunikationsverbindungen zwischen dem Kommunikationsnetzanschluss und mindestens einer zur Spannungsversorgung von Datenkommunikationseinrichtungen des Datennetzes vorgesehenen Versorgungsader des Datennetzkabels.

Die Erfindung erlaubt es, auf einfache Weise sowohl leitungsorientierte Kommunikationseinrichtungen, z.B. TDM-Endgeräte, als auch paketorientierte Kommunikationseinrichtungen, z.B. sog. VoIP-Endgeräte (VoIP: Voice over Internet Protocol), an einer gemeinsamen Verkabelungsinfrastruktur zu nutzen. Als gemeinsame Verkabelungsinfrastruktur kann eine vorhandene Datennetzverkabelung, z.B. eine LAN-Verkabelung verwendet werden. Somit sind keine separaten Kabelnetze für leitungsorientierte Kommunikationseinrichtungen einerseits und paketorientierte Kommunikationseinrichtungen andererseits vorzusehen. Derartige Verkabelungsnetze sind insbesondere bei der Verkabelung von Endeinrichtungen aufgrund von deren im Allgemeinen hoher Anzahl, sehr aufwändig. Somit erweist sich die Erfindung durch die mögliche Vermeidung einer Mehrfachverkabelung insbesondere beim Verkabeln von Endeinrichtungen als besonderes vorteilhaft.

Ein weiterer Vorteil der Erfindung besteht darin, dass zur Erfüllung etwaiger Echtzeiterfordernisse der leitungsorientierten Kommunikationsverbindungen keine zusätzlichen Dienstgüteanforderungen an das paketorientierte Datennetz zu stellen sind.

Nach einer vorteilhaften Ausführungsform der Erfindung können die Koppelmittel Überlagerungsmittel umfassen zum Überlagern einer auf der mindestens einen Versorgungsader anliegenden Speisespannung durch die Kommunikationssignale und/oder zum Extrahieren der Kommunikationssignale aus einer dergestalt überlagerten Speisespannung.

Weiterhin können die Koppelmittel Einspeisemittel umfassen zum Einspeisen einer von einer an den Kommunikationsnetzanschluss angekoppelten Kommunikationseinrichtung stammenden Speisespannung in die mindestens eine Versorgungsader. Damit kann beispielsweise eine von einer Nebenstellenanlage stammende TDM-Spannungsversorgung zur Spannungsversorgung von Datenkommunikationseinrichtungen des Datennetzes genutzt werden. Auf diese Weise kann eine datennetzeigene Spannungsversorgung ersetzt werden.

Nach einer weiteren vorteilhaften Ausführungsform der Erfindung können mindestens zwei Versorgungsadern und eine sog. Phantomspeiseschaltung zur Spannungsversorgung dieser Versorgungsadern vorgesehen sein. Eine Phantomspeiseschaltung erlaubt es, dass die Spannungsversorgung auf datenführenden Adern erfolgt. Durch die Phantomspeiseschaltung können auch die Kommunikationssignale ohne Beeinträchtigung eines Datenpaketverkehrs über datenführende Adern übertragen werden. Die Kommunikationssignale können dazu einer Speisespannung überlagert werden.

Der Kommunikationsnetzanschluss der erfindungsgemäßen Datennetzschnittstelle kann vorzugsweise durch einen TDM-Anschluss zum Ankoppeln TDM-basierter Kommunikationseinrichtungen realisiert sein.

Die erfindungsgemäße Datennetzschnittstelle kann in eine Datenpaketvermittlungsseinrichtung, z.B. einen sog. Switch, einen sog. Hub, eine Routereinrichtung oder eine Brücke, integriert werden. Dabei können mehrere Datennetzanschlüsse einer oder mehrerer Datennetzschnittstellen hinsichtlich eines paketorientierten Datenverkehrs miteinander gekoppelt und hinsichtlich der Kommunikationssignale voneinander isoliert sein. Auf diese Weise können mehrere leitungsorientierte Kommunikationsverbindungen durch die Datenpaketvermittlungseinrichtung logisch und physikalisch voneinander getrennt weitergeleitet werden. Weiterhin können mehrere Datennetzanschlüsse einer oder mehrerer Datennetzschnittstellen der Datenpaketvermittlungseinrichtung hinsichtlich der Kommunikationssignale transparent gekoppelt sein. Dies erlaubt eine busartige Verkabelung von leitungsorientierten Kommunikationseinrichtungen.

Eine erfindungsgemäße Datennetzschnittstelle kann weiterhin in eine jeweilige leitungsorientierte Kommunikationseinrichtung integriert werden, um diese direkt an ein paketorientiertes Datennetz ankoppeln zu können.

Ein paketorientiertes Datennetz kann ferner mit einer an dieses angekoppelten, erfindungsgemäßen Datennetzschnittstelle auf einfache Weise zu einem Kommunikationssystem zur sowohl leitungsorientierten als auch paketorientierten Kommunikation erweitert werden. Zu diesem Zweck ist eine leitungsorientierte Vermittlungseinrichtung an den Kommunikationsnetzanschluss der Datennetzschnittstelle und mindestens eine weitere leitungsorientierte Kommunikationseinrichtung über das Datennetz an den Datennetzanschluss der Datennetzschnittstelle anzuschließen, so dass die weitere Kommunikationseinrichtung hinsichtlich der Kommunikationssignale mit der Vermittlungseinrichtung gekoppelt ist.

Ausführungsbeispiele der Erfindung werden nachfolgend anhand der Zeichnung näher erläutert.

Dabei zeigen in schematischer Darstellung:
Figur 1 und Figur 2 jeweils ein Ausführungsbeispiel einer erfindungsgemäßen Datennetzschnittstelle, und
Figur 3 und Figur 4 jeweils ein Kommunikationssystem mit mehreren über ein paketorientiertes Datennetz miteinander gekoppelten leitungsorientierten sowie paketorientierten Kommunikationseinrichtungen.

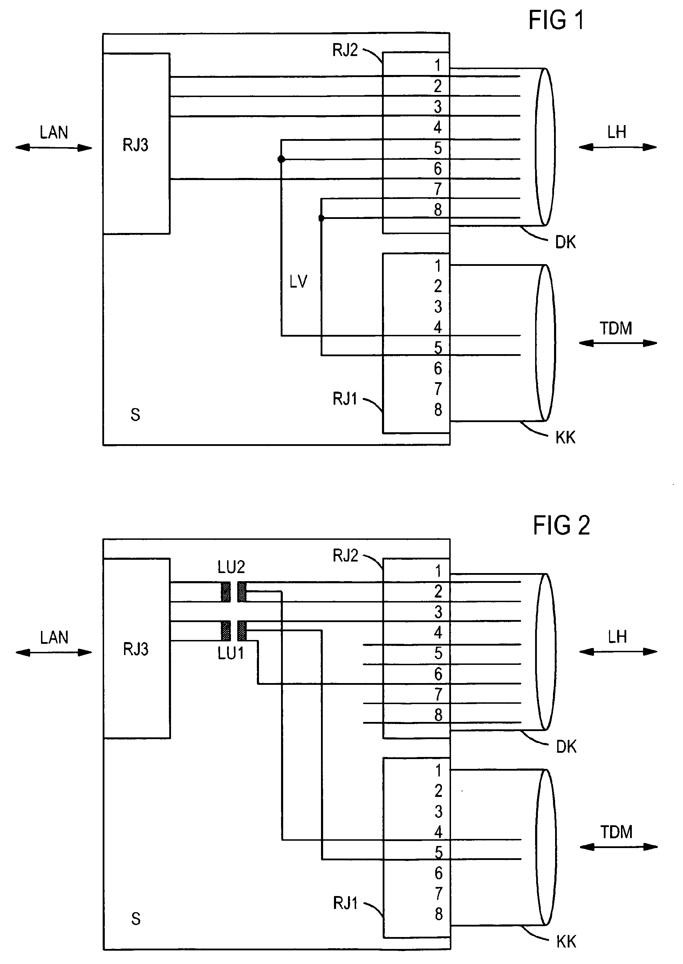

Die **Figuren 1 und 2** zeigen jeweils ein Ausführungsbeispiel einer erfindungsgemäßen Datennetzschnittstelle S in schematischer Darstellung. Die Datennetzschnittstelle S weist jeweils einen Datennetzanschluss RJ3 zum Anschluss eines paketorientierten, hier internetprotokollbasierten Datennetzes LAN, einen Datennetzanschluss RJ2 zum Anschluss eines paketorientierten, hier internetprotokollbasierten Datennetzes LH sowie einen Kommunikationsnetzanschluss RJ1 zum Anschluss einer leitungsorientierten, hier TDM-basierten (TDM: Time Division Multiplexing) Kommunikationseinrichtung, z.B. zur Sprach-, Video- und/oder Fax-Echtzeitkommunikation. Zum Anschluss des Datennetzes LH dient hierbei ein Datennetzkabel DK und zum Anschluss der Kommunikationseinrichtung ein Kommunikationsnetzkabel KK. Das Kommunikationsnetzkabel KK kann beispielsweise eine Zweidrahtleitung einer U_{P0E}-Schnittstelle sein.

Die Anschlüsse RJ1, RJ2 und RJ3 sind vorzugsweise als sogenannte RJ45-Anschlussdosen ausgeführt. Die Anschlusskontakte der Anschlüsse RJ1 und RJ2 sind mit den Ziffern 1,...,8 gemäß dem RJ45-Stecksystemstandard nummeriert. Ein Masseanschluss, auf den alle Spannungen zu beziehen sind, ist aus Übersichtlichkeitsgründen nicht dargestellt.

Das Datennetz LH ist in den vorliegenden Ausführungsbeispielen als internetzprotokollbasiertes lokales Netz mit einer sogenannten LAN-Speisung gemäß dem IEEE-Standard 802.3af zur Spannungsversorgung von internetprotokollbasierten Endgeräten des Datennetzes realisiert.

Der Kommunikationsnetzanschluss RJ1 dient zum Anschluss einer jeweiligen TDM-basierten Kommunikationseinrichtung mit sogenannter TDM-Speisung, bei der über das Kommunikationsnetzkabel KK eine Speisespannung für angeschlossene TDM-Endgeräte übertragen wird. Die TDM-Speisespannung wird TDM-Kommunikationssignalen, die im Rahmen von leitungsorientierten Kommunikationsverbindungen zu übertragen sind, auf dem Kommunikationsnetzkabel KK überlagert. In den vorliegenden Ausführungsbeispielen sind die TDM-Speisespannung und die überlagerten TDM-Kommunikationssignale in die Anschlusskontakte 4 und 5 des Kommunikationsnetzanschlusses RJ1 einzuspeisen. Die Speisespannung der TDM-Speisung sowie die TDM-Kommunikationssignale werden vom Kommunikationsanschluss RJ1 zum Datennetzanschluss RJ2 und von diesem in zur LAN-Speisung vorgesehene Versorgungsadern des Datennetzkabels DK eingeleitet. Auf diese Weise kann eine vorhandene TDM-Speisung einer an die Datennetzschnittstelle S angekoppelten TDM-basierten Kommunikationseinrichtung zur LAN-Speisung genutzt werden.

Bei dem in **Figur 1** dargestellten Ausführungsbeispiel der Datennetzschnittstelle S erfolgt die LAN-Speisung über separate, d.h. nicht datenführende Versorgungsadern 4, 5, 7 und 8 des Datenkabels DK. Die Kabeladern des Datenkabels DK und des Kommunikationsnetzkabels KK werden hier und im Folgenden auf die gleiche Weise mit den Ziffern 1,...,8 nummeriert wie die jeweils entsprechenden Anschlusskontakte der Anschlüsse RJ1 und RJ2. Zur Übertragung der in die Anschlusskontakte 4 und 5 des Kommunikationsanschlusses RJ1 eingespeisten Speisespannung und TDM-Kommunikationssignale zu den separaten Versorgungsadern 4, 5, 7 und 8 des Datenkabels DK ist eine leitende Verbindung LV als Koppelmittel zwischen dem Anschlusskontakt 4 des Kommunikationsnetzanschlusses RJ1 und den Anschlüssen 4 und 5 des Datennetzanschlusses RJ2 einerseits und zwischen dem Anschluss 5 des Kommunikationsnetzanschlusses RJ1 und den Anschlüssen 7 und 8 des Datennetzanschlusses RJ2 andererseits vorgesehen.

Bei dem in **Figur 2** dargestellten Ausführungsbeispiel einer erfindungsgemäßen Datennetzschnittstelle S erfolgt die LAN-Speisung über datenführende Kabeladern 1, 2, 3 und 6 des Datennetzkabels DK. D.h. die datenführenden Kabeladern 1, 2, 3 und 6 dienen zugleich als Versorgungsadern für die LAN-Speisung. In Figur 2 sind als Koppelmittel zur Übertragung der in die Kabeladern 4 und 5 des Kommunikationsnetzanschlusses RJ1 eingespeisten Speisespannung und TDM-Kommunikationssignale auf die datenführenden Kabeladern 1, 2, 3 und 6 des Datenkabels DK sogenannte LAN-Übertrager LU1 und LU2 vorgesehen. Die LAN-Übertrager LU1 und LU2 umfassen jeweils einen Transformator, dessen erste Wicklung an den Datennetzanschluss RJ3 und dessen zweite Wicklung an datenführende Anschlusskontakte des Datennetzanschlusses RJ2 angeschlossen ist. Die Spulenenden der zweiten Wicklung des LAN-Übertragers LU1 sind hierbei an die Anschlusskontakte 3 und 6 des Datennetzanschlusses RJ2 und die Spulenenden der zweiten Wicklung des LAN-Übertragers LU2 an die Anschlusskontakte 1 und 2 des Datennetzanschlusses RJ2 angeschlossen. Die zweiten Wicklungen der LAN-Übertrager LU1 und LU2 weisen jeweils eine Mittelanzapfung auf, die im Falle des LAN-Übertragers LU1 mit dem Anschlusskontakt 5 und im Falle des LAN-Übertragers LU2 mit dem Anschlusskontakt 4 des Kommunikationsnetzanschlusses RJ1 verbunden sind. Durch die mit einer Mittelanzapfung versehenen LAN-Übertrager LU1 und LU2 wird jeweils eine Phantomspeiseschaltung zur Speisung der datenführenden Kabeladern 1, 2, 3 und 6 des Datenkabels DK durch die über die Anschlusskontakte 4 und 5 des Kommunikationsnetzanschlusses RJ1 eingespeiste und mit TDM-Kommunikationssignalen überlagerte TDM-Speisespannung realisiert.

Durch die Phantomspeiseschaltung werden die TDM-Speisespannung und die dieser überlagerten TDM-Kommunikationssignale gleichphasig in das Adernpaar 1, 2 bzw. in das Adernpaar 3, 6 des Datennetzkabels DK eingespeist. Dagegen werden die dem paketorientierten Datenverkehr zugrundeliegenden Datensignale durch die LAN-Übertrager LU1 und LU2 gegenphasig in das Adernpaar 1, 2 bzw. in das Adernpaar 3, 6 des Datennetzkabels DK eingespeist. Auf diese Weise werden die über das Kommunikationsnetzkabel KK eingespeiste Speisespannung und die TDM-Kommunikationssignale den Datensignalen im Datennetz LH reversibel überlagert. Endgeräte, die über eine korrespondierende Datennetzschnittstelle mit entsprechender Übertragungsschaltung an das Datennetz LH angeschlossen sind, können die Datensignale wieder von den TDM-Kommunikationssignalen und der Speisespannung trennen. Eine zu diesem Zweck eingesetzte Datennetzschnittstelle wird häufig als Splitter bezeichnet.

Die in Figur 2 dargestellte Ausführungsform der erfindungsgemäßen Datennetzschnittstelle S mit Phantomspeisung in die LAN-Übertrager LU1 und LU2 kann insbesondere in sogenannten 1000Base-T-LANs eingesetzt werden, bei denen eine LAN-Speisung auf den datenführenden Adern erfolgt.

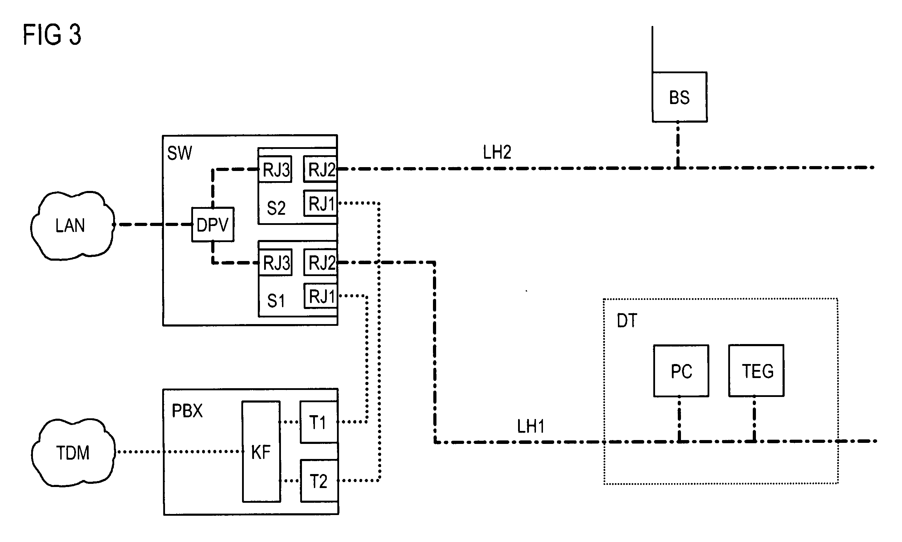

In **Figur 3** ist ein Kommunikationssystem mit mehreren über ein paketorientiertes Datennetz miteinander gekoppelten leitungsorientierten sowie paketorientierten Kommunikationseinrichtungen schematisch dargestellt. Das Kommunikationssystem umfasst eine TDM-basierte Vermittlungseinrichtung PBX, z.B. eine Nebenstellenanlage, die an eine Datenpaketvermittlungseinrichtung SW, z.B. ein Switch, HUB, Router oder eine Brücke, gekoppelt ist. Die Vermittlungseinrichtung PBX verfügt über ein TDM-Koppelfeld KF, an das ein TDM-basiertes Kommunikationsnetz TDM sowie mehrere digitale TDM-Teilnehmerschnittstellen T1, T2 mit TDM-Speisung, z.B. sogenannte U_{P0E}-Schnittstellen, angeschlossen sind. Die Teilnehmerschnittstellen T1 und T2 stellen jeweils eine den TDM-Kommunikationssignalen überlagerte Speisespannung bereit.

Die Datenpaketvermittlungseinrichtung SW umfasst ein Datenpaketvermittlungsmodul DPV, an das ein herkömmliches lokales Netz LAN ohne LAN-Speisung angeschlossen ist. Die Datenpaketvermittlungseinrichtung SW weist ferner mehrere erfindungsgemäße Datenschnittstellen S1, S2 gemäß Figur 1 oder Figur 2 auf. Die Datenschnittstellen S1 und S2 sind jeweils über ihren Kommunikationsnetzanschluss RJ3 an das Datenpaketvermittlungsmodul DPV angekoppelt. Die Datennetzschnittstelle S1 ist weiterhin über ihren Kommunikationsnetzanschluss RJ1 an die Teilnehmerschnittstelle T1 der Vermittlungseinrichtung PBX und über ihren Datennetzanschluss RJ2 an einen Datennetzzweig LH1 mit LAN-Speisung angekoppelt. Die Datennetzschnittstelle S2 ist entsprechend über ihren Kommunikationsanschluss RJ1 an die Teilnehmerschnittstelle T2 und über ihren Datennetzanschluss RJ2 an einen Datennetzzweig LH2 mit LAN-Speisung angeschlossen. Die Datennetzzweige LH1 und LH2 erhalten ihre LAN-Speisespannung über die Datennetzschnittstellen S1 und S2 von der TDM-Speisung der Vermittlungseinrichtung PBX. Den auf den Datennetzzweigen LH1 und LH2 anliegenden Speisespannungen sind jeweils die TDM-Kommunikationssignale überlagert.

Die unterschiedlichen Kategorien der jeweils transportierten Kommunikationssignale sind in Figur 3 durch unterschiedliche Linientypen angedeutet. So sind die rein TDM-basierten Signalleitungen durch punktierte Linien, die rein paketorientierten Signalleitungen durch strichlierte Linien und die sowohl TDM-Kommunikationssignale als auch Datenpakete führenden Leitungen durch strichpunktierte Linien dargestellt.

Hinsichtlich der TDM-Kommunikationssignale ist der Datennetzzweig LH1 über die Datennetzschnittstelle S1 an die Teilnehmerschnittstelle T1 und der Datennetzzweig LH2 über die Datennetzschnittstelle S2 an die Teilnehmerschnittstelle T2 angekoppelt. Die Datennetzschnittstellen S1 und S2 sind dabei hinsichtlich der Kommunikationssignale voneinander isoliert, so dass die Verbindungen über T1, S1 und LH1 sowie über T2, S2 und LH2 getrennte TDM-Kommunikationszweige bilden.

In Figur 3 sind aus Gründen der Übersichtlichkeit nur zwei derartige TDM-Kommunikationszweige dargestellt. Für eine vorteilhafte Verwendung bestehender Vermittlungseinrichtungen mit typischerweise 16 TDM-Teilnehmerschnittstellen sind entsprechend 16 Datennetzschnittstellen zum sternförmigen Anschluss von 16 Datennetzzweigen mit LAN-Speisung vorzusehen.

Der Datennetzzweig LH1 führt im vorliegenden Ausführungsbeispiel zu einem typischen Arbeitsplatz DT, der mit einem Personalcomputer PC sowie mit einem TDM-basierten Telefon TEG ausgestattet ist. Der Personalcomputer PC und das Telefon TEG sind dabei jeweils über eine Datennetzschnittstelle (nicht dargestellt) an den Datennetzzweig LH1 angeschlossen. Die Datennetzschnittstelle des Telefons TEG dient hierbei zur Extraktion der Speisespannung sowie der TDM-Kommunikationssignale aus den Versorgungsadern des Datennetzzweiges LH1. Auf diese Weise ist das Telefon TEG hinsichtlich der TDM-Kommunikationssignale über die Datennetzschnittstelle S1 an die Teilnehmerschnittstelle T1 der Vermittlungseinrichtung PBX gekoppelt. Die Datennetzschnittstelle des Personalcomputers PC dient dagegen zum Austausch von Datenpaketen mit dem Datennetzzweig LH1. Über die Datenpaketvermittlungseinrichtung SW ist der Personalcomputer PC mit dem Datennetzzweig LH2 und dem lokalen Netz LAN gekoppelt.

Weiterhin ist im vorliegenden Ausführungsbeispiel an den Datennetzzweig LH2 eine Basisstation BS angeschlossen zur drahtlosen Ankopplung von paketorientierten Kommunikationsendgeräten, z.B. im Rahmen eines sogenannten Wireless LAN oder zur drahtlosen Ankopplung von leitungsorientierten Kommunikationsendgeräten, wie z.B. Schnurlostelefonen. Hinsichtlich einer leitungsorientierten Kommunikation ist die Basisstation BS über die Datennetzschnittstelle S2 an die Teilnehmerschnittstelle T2 der Vermittlungseinrichtung PBX gekoppelt. Hinsichtlich einer Datenpaketkommunikation ist die Basisstation BS über die Datenpaketvermittlungseinrichtung SW an das lokale Netz LAN sowie an den Datennetzzweig LH1 und damit an den Personal Computer PC koppelbar.

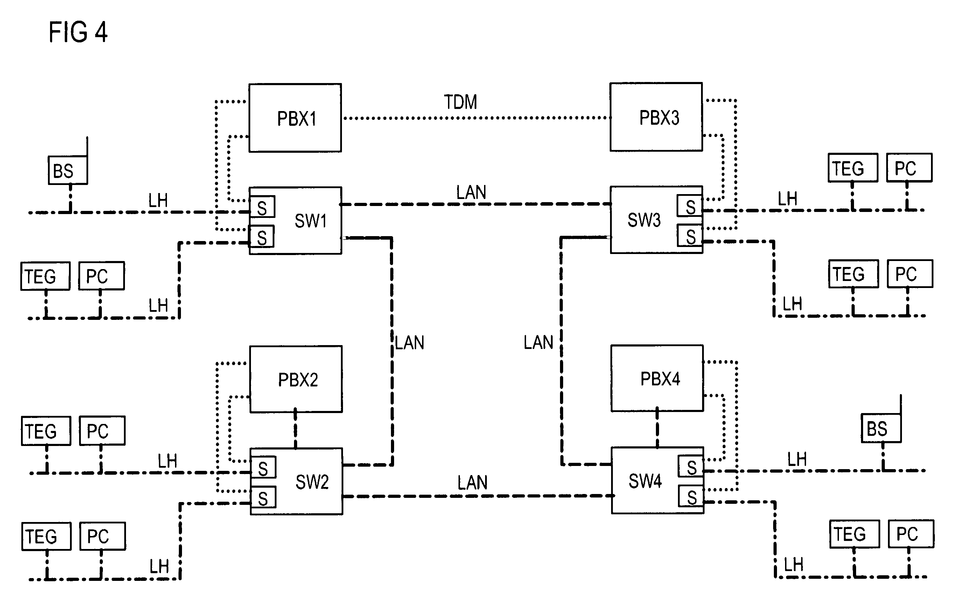

**Figur 4** zeigt schließlich ein Kommunikationssystem, das mehrere miteinander gekoppelte Anordnungen gemäß Figur 3 umfasst, in schematischer Darstellung. Hierbei sind mehrere jeweils mit zwei erfindungsgemäßen Datennetzschnittstellen S versehene Datenpaketvermittlungseinrichtungen SW1, SW2, SW3 und SW4 über lokale Netze LAN miteinander gekoppelt. An eine jeweilige Datennetzschnittstelle S ist dabei sowohl ein lokales Netz LH mit LAN-Speisung und der Speisespannung überlagertem TDM-Kommunikationskanal als auch eine jeweilige TDM-Teilnehmerschnittstelle einer jeweiligen Vermittlungseinrichtung PBX1, PBX2, PBX3 bzw. PBX4 angekoppelt. An die Datennetzzweige LH sind sowohl leitungsorientierte Kommunikationseinrichtungen, hier TDM-basierte Telefone TEG und gegebenenfalls leitungsorientierte Basisstationen BS, als auch paketorientierte Kommunikationseinrichtungen, hier Personalcomputer PC und gegebenenfalls paketorientierte Basisstationen BS angekoppelt. Während die Vermittlungseinrichtungen PBX1 und PBX3 über eine TDM-Strecke TDM miteinander gekoppelt sind, sind die Vermittlungseinrichtungen PBX2 und PBX4 über zusätzliche LAN-Gateways an die Vermittlungseinrichtungen SW2 und SW4 angeschlossen und somit über deren LAN-Verbindung miteinander verbindbar.

Die an die Datennetzzweige LH angeschlossenen, paketorientierten Kommunikationseinrichtungen PC und gegebenenfalls BS sind über die Datenpaketvermittlungseinrichtungen SW1, SW2, SW3 und SW4 und das lokale Netz LAN miteinander koppelbar. Darüber hinaus sind die leitungsorientierten Kommunikationseinrichtungen TEG und gegebenenfalls BS über die Datennetzschnittstellen S hinsichtlich der zu übertragenden TDM-Kommunikationssignale an die leitungsorientierten Vermittlungseinrichtungen PBX1, PBX2, PBX3 und PBX4 angeschlossen.

Die unterschiedlichen Kategorien der jeweils transportierten Kommunikationssignale sind in Figur 4 in derselben Weise wie in Figur 3 durch unterschiedliche Linientypen angedeutet.

Durch die erfindungsgemäßen Datennetzschnittstellen S können internetprotokoll- und TDM-basierte Kommunikationskanäle in einer gemeinsamen Verkabelungsinfrastruktur, nämlich den Datennetzzweigen LH kombiniert werden. Für die Datennetzzweige LH kann vorzugsweise eine vorhandene LAN-Verkabelung verwendet werden, deren für eine LAN-Speisung vorgesehener physikalischer Kanal zur Übermittlung eines zusätzlichen leitungsorientierten, hier TDM-basierten Kommunikationskanals, genutzt wird. Dieser zusätzliche leitungsorientierte Kommunikationskanal wird auf einfache Weise einer jeweiligen Speisespannung überlagert. Die vorteilhaften Echtzeiteigenschaften eines leitungsorientierten Kommunikationskanals bleiben dabei erhalten. Ferner können mittels erfindungsgemäßer Datennetzschnittstellen vorhandene paketorientierte und leitungsorientierte Kommunikationseinrichtungen über eine gemeinsame physikalische Schnittstelle weitgehend unverändert weiterverwendet werden.

## Patentansprüche

1. Datennetzschnittstelle (S, S1, S2) zum Koppeln von leitungsorientierten Kommunikationseinrichtungen (PBX, TEG) über ein paketorientiertes Datennetz (LH, LH1, LH2), mit
a) einem Datennetzanschluss (RJ2) zum Ankoppeln eines Datennetzkabels (DK) des Datennetzes (LH, LH1, LH2),
b) einem Kommunikationsnetzanschluss (RJ1) zum Ankoppeln einer Kommunikationseinrichtung (PBX, TEG) zum Aufbau von leitungsorientierten Kommunikationsverbindungen, und
c) zwischen dem Kommunikationsnetzanschluss (RJ1) und dem Datennetzanschluss (RJ2) angeordneten Koppelmitteln (LV, LU1, LU2) zum Übertragen von Kommunikationssignalen der Kommunikationsverbindungen zwischen dem Kommunikationsnetzanschluss (RJ1) und mindestens einer zur Spannungsversorgung von Datenkommunikationseinrichtungen des Datennetzes vorgesehenen Versorgungsader (4, 5, 7, 8; 1,2,3,6) des Datennetzkabels (DK),
wobei die Koppelmittel Einspeisemittel (LU1, LU2) umfassen zum Einspeisen einer von einer an den Kommunikationsnetzanschluss (RJ1) angekoppelten Kommunikationseinrichtung (PBX) stammenden Speisespannung in die mindestens eine Versorgungsader.

2. Datennetzschnittstelle nach Anspruch 1,
**dadurch gekennzeichnet,**
**dass** die Koppelmittel Überlagerungsmittel (LU1, LU2) umfassen zum Überlagern einer auf der mindestens einen Versorgungsader anliegenden Speisespannung durch die Kommunikationssignale.

3. Datennetzschnittstelle nach einem der vorhergehenden Ansprüche,
**dadurch gekennzeichnet,**
**dass** die Koppelmittel Einspeisemittel (LU1, LU2) umfassen zum Einspeisen einer von einer an den Kommunikationsnetzanschluss (RJ1) angekoppelten Kommunikationseinrichtung (PBX) stammenden Speisespannung in die mindestens eine Versorgungsader.

4. Datennetzschnittstelle nach einem der vorhergehenden Ansprüche,
**dadurch gekennzeichnet,**
**dass** mindestens zwei Versorgungsadern und eine sog. Phantomspeiseschaltung (LU1, LU2) zur Spannungsversorgung der Versorgungsadern vorgesehen sind.

5. Datennetzschnittstelle nach einem der vorhergehenden Ansprüche,
**dadurch gekennzeichnet,**
**dass** der Kommunikationsnetzanschluss (RJ1) durch einen TDM-Anschluss (TDM: Time Division Multiplexing) zum Ankoppeln TDM-basierter Kommunikationseinrichtungen realisiert ist.

6. Datenpaketvermittlungseinrichtung (SW, SW1, SW2, SW3, SW4) mit mindestens einer Datennetzschnittstelle (S, S1, S2) gemäß einem der vorhergehenden Ansprüche, bei der mehrere Datennetzanschlüsse (RJ2) hinsichtlich eines paketorientierten Datenverkehrs miteinander gekoppelt und hinsichtlich der Kommunikationssignale voneinander isoliert sind.

7. Datenpaketvermittlungseinrichtung (SW, SW1, SW2, SW3, SW4) mit mindestens einer Datennetzschnittstelle (S, S1, S2) gemäß einem der Ansprüche 1 bis 5, bei der mehrere Datennetzanschlüsse (RJ2) hinsichtlich der Kommunikationssignale transparent gekoppelt sind.

8. Kommunikationseinrichtung (TEG) zum Aufbau von leitungsorientierten Kommunikationsverbindungen mit integrierter Datennetzschnittstelle gemäß einem der Ansprüche 1 bis 5 zum Ankoppeln der Kommunikationseinrichtung (TEG) an ein paketorientiertes Datennetz (LH, LH1, LH2, LAN).

9. Kommunikationssystem mit einem paketorientierten Datennetz (LH, LH1, LH2) und einer an dieses angekoppelten Datennetzschnittstelle (S, S1, S2) gemäß einem der Ansprüche 1 bis 5, bei dem
eine leitungsorientierte Vermittlungseinrichtung (PBX) an den Kommunikationsnetzanschluss (RJ1) der Datennetzschnittstelle und
mindestens eine weitere leitungsorientierte Kommunikationseinrichtung (TEG) über das Datennetz (LH, LH1, LH2) an den Datennetzanschluss (RJ2) der Datennetzschnittstelle angeschlossen sind, so dass die weitere Kommunikationseinrichtung (TEG) hinsichtlich der Kommunikationssignale mit der Vermittlungseinrichtung (PBX) gekoppelt ist.

## Claims

1. A data network interface (S, S1, S2) for coupling line-oriented communication devices (PBX, TEG) via a packet-oriented data network (LH, LH1, LH2), having
a) a data network connection (RJ2) for coupling a data network cable (DK) for the data network (LH, LH1, LH2),
b) a communication network connection (RJ1) for coupling a communication device (PBX, TEG) for setting up line-oriented communication links, and
c) coupling means (LV, LU1, LU2), arranged between the communication network connection (RJ1) and the data network connection (RJ2), for transmitting communication signals of the communication links between the communication network connection (RJ1) and at least one supply conductor (4, 5, 7, 8; 1, 2, 3, 6), which is provided for supplying voltage to data communication devices in the data network, in the data network cable (DK),
the coupling means comprising feed means (LU1, LU2) for feeding a supply voltage, which originates from a communication device (PBX) which is coupled to the communication network connection (RJ1), to the at least one supply conductor.

2. The data network interface as claimed in claim 1,
**characterised in that** the coupling means comprise superimposition means (LU1, LU2) for superimposing the communication signals on a supply voltage which is applied to the at least one supply conductor.

3. The data network interface as claimed in one of the preceding claims,
**characterised in that** the coupling means comprise feed means (LU1, LU2) for feeding a supply voltage, which originates from a communication device (PBX) which is coupled to the communication network connection (RJ1), to the at least one supply conductor.

4. The data network interface as claimed in one of the preceding claims,
**characterised in that** at least two supply conductors and one so-called phantom supply circuit (LU1, LU2) are provided for supplying voltage to the supply conductors.

5. The data network interface as claimed in one of the preceding claims,
**characterised in that** the communication network connection (RJ1) is in the form of a TDM connection (TDM: Time Division Multiplexing) for coupling TDM-based communication devices.

6. A data packet switching device (SW, SW1, SW2, SW3, SW4) having at least one data network interface (S, S1, S2) as claimed in one of the preceding claims, in which two or more data network connections (RJ2) are coupled to one another for packet-oriented data traffic, and are isolated from one another for the communication signals.

7. A data packet switching device (SW, SW1, SW2, SW3, SW4) having at least one data network interface (S, S1, S2) as claimed in one of claims 1 to 5, in which two or more data network connections (RJ2) are coupled in a transparent manner for the communication signals.

8. A communication device (TEG) for setting up line-oriented communication links to an integrated data network interface as claimed in one of claims 1 to 5 for coupling the communication device (TEG) to a packet-oriented data network (LH, LH1, LH2, LAN).

9. A communication system having a packet-oriented data network (LH, LH1, LH2) and having a data network interface (S, S1, S2) which is coupled to it and as claimed in one of claims 1 to 5, in which
a line-oriented switching device (PBX) is connected to the communication network connection (RJ1) of the data network interface, and
at least one further line-oriented communication device (TEG) is connected via the data network (LH, LH1, LH2) to the data network connection (RJ2) of the data network interface, so that the further communication device (TEG) is coupled to the switching device (PBX) for the communication signals.

## Revendications

1. Interface de réseau de données (S, S1, S2) pour le couplage de dispositifs de communication orientés circuit (PBX, TEG) par le biais d'un réseau de données orienté paquets (LH, LH1, LH2), comprenant
a) une borne de réseau de données (RJ2) pour le raccordement d'un câble de réseau de données (DK) du réseau de données (LH, LH1, LH2),
b) une borne de réseau de communication (RJ1) pour le raccordement d'un dispositif de communication (PBX, TEG) pour établir des liaisons de communication orientées circuit et
c) des moyens de couplage (LV, LU1, LU2) situés entre la borne de réseau de communication (RJ1) et la borne de réseau de données (RJ2) pour la transmission de signaux de communication des liaisons de communication entre la borne de réseau de communication (RJ1) et au moins un fil d'alimentation (4, 5, 7, 8 ; 1, 2, 3, 6) du câble de réseau de données (DK) prévu pour l'alimentation en tension de dispositifs de communication de données du réseau de données,
les moyens de couplage comprenant des moyens d'injection (LU1, LU2) pour l'injection dans l'au moins un fil d'alimentation d'une tension d'alimentation provenant d'un dispositif de communication (PBX) raccordé à la borne de réseau de communication (RJ1).

2. Interface de réseau de données selon la revendication 1, **caractérisée en ce que** les moyens de couplage comprennent des moyens de superposition (LU1, LU2) pour la superposition d'une tension d'alimentation appliquée à l'au moins un fil d'alimentation, grâce aux signaux de communication.

3. Interface de réseau de données selon l'une des revendications précédentes, **caractérisée en ce que** les moyens de couplage comprennent des moyens d'injection (LU1, LU2) pour l'injection dans l'au moins un fil d'alimentation d'une tension d'alimentation provenant d'un dispositif de communication (PBX) raccordé à la borne de réseau de communication (RJ1).

4. Interface de réseau de données selon l'une des revendications précédentes, **caractérisée en ce qu'**au moins deux fils d'alimentation et un circuit dit circuit d'alimentation fantôme (LU1, LU2) sont prévus pour l'alimentation en tension des fils d'alimentation.

5. Interface de réseau de données selon l'une des revendications précédentes, **caractérisée en ce que** la borne de réseau de communication (RJ1) est réalisée par une connexion TDM (TDM : *Time Division Multiplexing*) pour le raccordement de dispositifs de communication basés sur TDM.

6. Dispositif de commutation de paquets de données (SW, SW1, SW2, SW3, SW4) comprenant au moins une interface de réseau de données (S, S1, S2) selon l'une des revendications précédentes, dans lequel plusieurs bornes de réseau de données (RJ2) sont couplées les unes aux autres pour ce qui est d'un trafic de données orienté paquets et sont isolées les unes des autres pour ce qui est des signaux de communication.

7. Dispositif de commutation de paquets de données (SW, SW1, SW2, SW3, SW4) comprenant au moins une interface de réseau de données (S, S1, S2) selon l'une des revendications 1 à 5, dans lequel plusieurs bornes de réseau de données (RJ2) sont couplées de manière transparente pour ce qui est des signaux de communication.

8. Dispositif de communication (TEG) pour l'établissement de liaisons de communication orientées circuit avec une interface de réseau de données intégrée selon l'une des revendications 1 à 5 pour le raccordement du dispositif de communication (TEG) à un réseau de données orienté paquets (LH, LH1, LH2, LAN).

9. Système de communication comprenant un réseau de données orienté paquets (LH, LH1, LH2) et une interface de réseau de données (S, S1, S2) selon l'une des revendications 1 à 5 raccordée à ce réseau,
dans lequel un dispositif de commutation orienté circuit (PBX) est connecté à la borne de réseau de communication (RJ1) de l'interface de réseau de données et
au moins un autre dispositif de communication orienté circuit (TEG) est connecté à la borne de réseau de données (RJ2) de l'interface de réseau de données par le biais du réseau de données (LH, LH1, LH2), de manière à ce que l'autre dispositif de communication (TEG) soit couplé au dispositif de commutation (PBX) pour ce qui est des signaux de communication.
